Europäisches Patentamt

European Patent Office

Office européen des brevets

(19)

(11) Veröffentlichungsnummer : **0 040 196**
**B1**

(12) **EUROPÄISCHE PATENTSCHRIFT**

(45) Veröffentlichungstag der Patentschrift :
21.03.84

(21) Anmeldenummer : **80901532.4**

(22) Anmeldetag : **01.08.80**

(86) Internationale Anmeldenummer :
**PCT/EP 80/00070**

(87) Internationale Veröffentlichungsnummer :
**WO WO/81004 (19.02.81 Gazettee 81/05)**

(51) Int. Cl.³ : **G 03 B 15/03**, G 03 B   9/00

(54) VERFAHREN UND VORRICHTUNG ZUR HERSTELLUNG BLITZSYNCHRONISIERTER PHOTOGRAPHISCHER AUFNAHMEN BEWEGTER OBJEKTE.

(30) Priorität : **02.08.79 DE 2931408**

(43) Veröffentlichungstag der Anmeldung :
**25.11.81 Patentblatt 81/47**

(45) Bekanntmachung des Hinweises auf die Patenterteilung : **21.03.84 Patentblatt 84/12**

(84) Benannte Vertragsstaaten :
**FR**

(56) Entgegenhaltungen :
DE-A- 2 045 707
DE-C-   672 361
DE-C-   943 032
FR-A- 1 496 718
FR-A- 1 585 179
Review of Scientific Instruments, vol. 47, no. 9, September 1976, (American Institute of Physics, New York, US) H.C. Viljoen & T.K. Gaylord: "Electronic System for Optical Shutter Control", Seiten 1133 bis 1141

(73) Patentinhaber : **SCHWENK, Dieter**
**Denninger Strasse 200**
**D-8000 München 81 (DE)**

(72) Erfinder : **DORNSTÄDTER, Werner**
**Lena-Christ-Strasse 3**
**D-8047 Karlsfeld (DE)**
Erfinder : **HAHN, Oscar**
**Schwaighofstrasse 33**
**D-8180 Tegernsee (DE)**
Erfinder : **SITTENAUER,Herbert**
**Hammerschmiedstrasse 16**
**D-8185 Kreuth (DE)**

(74) Vertreter : **Sajda, Wolf E., Dipl.-Phys. et al**
**Patentanwälte Popp, Sajda & v. Bülow Möhlstrasse**
**35 Postfach 86 06 24**
**D-8000 München 80/86 (DE)**

Verfahren und Vorrichtung zur Herstellung blitzsynchronisierter photographischer Aufnahmen bewegter Objekte

Die Erfindung betrifft ein Verfahren zur Herstellung blitzsynchronisierter photographischer Aufnahmen bewegter Objekte, bei dem mit Hilfe einer Kameraanordnung gearbeitet wird, bei der zeitlich nacheinander ein Schlitzverschluß, ein Zentralverschluß und ein Blitzlicht ausgelöst werden.

Die Erfindung betrifft ferner eine Vorrichtung zur Durchführung des Verfahrens mit einer Kamera, mit einem in die Kamera eingebauten Schlitzverschluß, mit einem vor der Kamera angeordneten Zentralverschluß mit Blitzkontakt und mit einem an die Kamera angeschlossenen Blitzlichtgerät.

Bei Kameras kennt man im wesentlichen zwei Verschlusstypen, nämlich Schlitzverschlüsse und Zentralverschlüsse. Der Schlitzverschluss besteht aus zwei Vorhängen mit einer Schlitzöffnung, bei dem die Rollos während der Belichtung mit offenem Schlitz waagerecht oder senkrecht ablaufen. Die Kürze der Belichtungszeit hängt dabei von der Schlitzbreite ab, da die Rollos selbst mit konstanter Geschwindigkeit bewegt werden.

Mit Schlitzverschlüssen kann man sehr kurze Belichtungszeiten bis etwa 1/2 000 Sekunden erzielen, wobei die Rollos dicht vor dem Film im Kameragehäuse untergebracht sind. Dadurch ergibt sich der Vorteil, dass das Kamerafenster frei bleibt und praktisch sämtliche Wechselobjektive und ausgefallenen optischen Systeme verwendet werden können, ohne dass jedesmal ein neuer Verschluss erforderlich ist.

Während kurze Belichtungszeiten von weniger als 1/125 Sekunden beim Schlitzverschluss zwar das Problem der Kameraerschütterung ausräumen, tritt bei solchen und kürzeren Belichtungszeiten ein anderes Problem auf, wenn man mit Elektronenblitzbeleuchtung arbeiten will. Die Erfahrung hat gezeigt, dass sich der Schlitzverschluss nämlich nur für Belichtungszeiten von 1/30 Sekunden bis höchstens 1/125 Sekunden synchronisieren lässt, so dass bei Blitzlichtaufnahmen mit kürzerer Belichtungszeit das Blitzlicht nur teilweise während des geöffneten Verschlusses zur Geltung kommt.

Bei Zentralverschlüssen kann man zwar bis zu Verschlusszeiten von 1/500 Sekunden blitzsynchronisiert arbeiten, jedoch tritt in diesem Falle die Schwierigkeit auf, dass der Zentralverschluss im allgemeinen dort angeordnet ist, wo das Strahlenbündel minimalen Durchmesser besitzt, damit der Zentralverschluss keine Blendenfunktion ausübt. In der Praxis bedeutet dies, dass der Zentralverschluss im allgemeinen fest ins Kameraobjektiv eingebaut ist, gegebenenfalls hinter der Hinterlinse im Kameragehäuse. Auf diese Weise ist der Zentralverschluss nie unmittelbar vor dem Film angeordnet, und aufgrund der Tatsache, dass die Hinterlinse auch bei Wechselobjektiven Bestandteil des Objektivsystems ist, ist man auf die vom jeweiligen Kamerahersteller angebotenen Wechselobjektive angewiesen und hinsichtlich des möglichen Brennweitenbereichs eingeschränkt.

Aus der DE-OS 20 45 707 ist zwar bereits eine einäugige Spiegelreflexkamera mit zwei hintereinander geschalteten Verschlüssen bekannt, bei der eine Steuervorrichtung dafür sorgen soll, dass die Öffnungs- und Schliessvorgänge der beiden Verschlüsse für die Scharfeinstellung durch den Sucher und die Belichtung in exakter Zeitenfolge ablaufen. Die dort beschriebene Anordnung arbeitet mit einer Steuerschaltung mit an einen Elektromagneten angeschlossenen ersten und zweiten Schaltern, die mit einer aufwendigen Mechanik zusammenwirken, um das Öffnen und Schliessen der beiden Verschlüsse in Abhängigkeit von bestimmten Voraussetzungen mechanisch zu steuern. Die mechanisch zu betätigenden Schalter sind dabei im Kameragehäuse angeordnet und an einen Betätigungsmechanismus im Objektivtubus angeschlossen.

Bei der dort angegebenen Vorrichtung kann jedoch ein Objektiv mit eingebautem Zentralverschluss nur in Verbindung mit der dazu passenden Kamera zweckmässigerweise eingesetzt werden. Ausführungen darüber, wie eine Blitzsynchronisation mit den beiden vorgesehenen Verschlüssen erfolgen soll, lassen sich der genannten Druckschrift nicht entnehmen.

Der Erfindung liegt daher die Aufgabe zugrunde, ein Verfahren und eine Vorrichtung anzugeben, die es dem Benutzer ermöglichen, zur Herstellung photographischer Aufnahmen schnell bewegter und durch Blitzlicht aufgehellter Objekte unabhängig von bestimmten Objektivsystemen zu arbeiten und ohne Brennweiteneinschränkung Kameras und Spiegelreflexkameras beliebiger Hersteller einzusetzen.

Die erfindungsgemäße Lösung besteht darin, daß bei einem Verfahren der angegebenen Art unter Verwendung einer Kamera, die einen Schlitzverschluß mit Blitzkontakt aufweist, und eines Zentralverschlusses mit einem weiteren Blitzkontakt die verzögerte Öffnung des Zentralverschlusses im Verhältnis zum Schlitzverschluß durch den Blitzkontakt der Kamera und die Auslösung des Blitzlichtes durch den weiteren Blitzkontakt des Zentralverschlusses gesteuert wird, so daß das gesamte Blitzlichtintervall im Öffnungsintervall des Zentralverschlusses und dieses vollständig im Öffnungsintervall des Schlitzverschlusses liegt.

Mit dem erfindungsgemäßen Verfahren wird in vorteilhafter Weise erreicht, daß die Überstrahlungsgefahr bei stark beleuchteten Objekten erheblich reduziert wird, so daß das Verfahren sowohl bei Tag als auch bei Nacht eingesetzt werden kann. Dabei kann in vorteilhafter Weise von dem Effekt Gebrauch gemacht werden, daß die Aufhellung bei Tag durch Blitzlicht um so besser ist, je größer die Blendenöffnung und je kürzer die Verschlußziet ist, da mit sehr kurzen blitzsynchronisierten Verschlußzeiten gearbeitet werden kann. Diese kurzen Verschlußzeiten wiederum bieten den Vorteil, daß keine Bewegungsunschärfen bei besonders schnell bewegten Objekten auftreten.

Arbeitet man beim erfindungsgemäßen Verfahren mit ineinander geschachtelten Zeitintervallen, die größenordnungsmäßig für den Schlitzverschluß 1/15 Sekunden, für den Zentralverschluß 1/500 Sekunden und für das Blitzlicht 1/1 000 Sekunden betragen, so wird in vorteilhafter Weise erreicht, daß einerseits keine Schwierigkeiten bei der Blitzsynchronisation auftreten, während andererseits auch schnell bewegte Objekte ohne Bewegungsunschärfe aufgenommen werden können.

Die erfindungsgemäße Vorrichtung zeichnet sich dadurch aus, daß der Zentralverschluß im Objektivtubus vor oder in dem Kameraobjektiv über eine Betätigungseinrichtung an den Blitzkontakt des Schlitzverschlusses angeschlossen ist, daß der Blitzkontakt des Zentralverschlusses seinerseits an das Blitzlichtgerät angeschlossen ist und daß die Betätigungseinrichtung des Zentralverschlusses ein Betätigungsteil und einen Hubmagneten aufweist, die auf den Auslöser des Zentralverschlusses einwirken.

Die erfindungsgemäße Vorrichtung gewährleistet, daß keine Überlappung der einzelnen Öffnungsintervalle stattfindet, so daß die gesamte Blitzleistung bei den photographischen Aufnahmen ausgenutzt werden kann. Dabei ist der Benutzer in der Wahl der jeweiligen Kamera, der zu verwendenden Objektive und Brennweiten sowie der Kamerahersteller völlig frei und kann dennoch die Vorteile moderner Spiegelreflexkameras mit eingebauten Schlitzverschlüssen ausnutzen.

Ein wesentlicher Vorteil der erfindungsgemässen Vorrichtung ist darin zu sehen, dass Objektive mit eingebautem Zentralverschluss mit entsprechenden Adapterringen problemlos an jede beliebige Kamera mit Wechseloptik und Schlitzverschluss angepasst und ohne weitere Umbaumassnahmen betrieben werden kann, wobei keinerlei Einschränkung auf Spiegelreflexkameras gegeben ist, sondern z. B. auch Kameras vom Typ Leica verwendet werden können. Dabei wird der zeitlich synchronisierte Ablauf der beiden Verschlüsse durch den normalen und ohnehin vorhandenen Blitzkontakt an der Kamera gesteuert, während das Blitzlicht seinerseits vom Blitzkontakt des Zentralverschlusses im Objektivtubus ausgelöst wird. Anstelle des Blitzkontaktes an der Kamera kann dabei beispielsweise auch ein anderer vorhandener Zusatzkontakt an der Kamera, z. B. für die Belichtung durch eine sogenannte Datenrückwand, oder ein Kontakt für eine Zweitkamera verwendet werden.

Die Kameraeinstellung mit Durchblick durch den Sucher kann in der Weise erfolgen, dass der Objektivverschluss manuell geöffnet und nach vorgenommener Einstellung wieder geschlossen wird, damit bei Beginn der Kameraauslösung der Objektivverschluss geschlossen ist. Eine solche Handhabung ist für viele Zwecke geeignet, insbesondere bei Aufnahmen aus fester Position. Bei Anwendungsgebieten, die einen Durchblick durch den Sucher bis unmittelbar vor der Auslösung erfordern, kann ohne weiteres ein von der Kamera unabhängiges Zusatzelement am Kameraauslöser angebracht werden, das ein automatisches Schliessen des Objektivverschlusses bei Beginn der Auslösung gewährleistet, während die kurzzeitige Öffnung des Objektivverschlusses für die Belichtung des Filmes vom Blitzkontakt der Kamera ausgelöst wird.

Der als Zentralverschluss ausgebildete Objektivverschluß kann selbstverständlich auch so geschaltet sein, daß er wahlweise auch voll geöffnet bleibt und die eigentliche Belichtung des Filmes in der Kamera dann ausschließlich vom Schlitzverschluß im Kameragehäuse selbst abhängig ist. Dies kann sich insbesondere dann als zweckmäßig erweisen, wenn eine Beleuchtung mit Blitzlicht nicht erforderlich ist und die kurzen Belichtungszeiten von Schlitzverschlüssen zur Geltung kommen sollen.

In Weiterbildung der erfindungsgemäßen Vorrichtung ist der Zentralverschluß ein mechanischer Lamellenverschluß und weist als Aufzugseinrichtung ein von einem Schrittmotor angetriebenes Zahnrad auf, das mit einer an den Zentralverschluß angeschlossenen Zahnstange in Eingriff steht.

Der Schrittmotor gewährleistet dabei einen sehr schnellen Spannvorgang des Zentralverschlusses, so daß mit einer sehr raschen Aufnahmefolge gearbeitet werden kann.

Diese rasche Aufnahmefolge wird bei der erfindungsgemäßen Vorrichtung noch dadurch unterstützt, wenn die Aufzugseinrichtung des Zentralverschlusses eine Federanordnung aufweist, welche die vom Schrittmotor gesteuerte Bewegung der Zahnstange in ihre Ausgangsstellung unterstützt.

Besonders vorteilhaft ist es, wenn bei der erfindungsgemässen Vorrichtung die Zahnstange mit einem Führungsschlitz geführt ist und einen Stift aufweist, der zur Steuerung der Zahnstangenbewegung mit zwei Endstellungsgebern zusammenarbeitet.

Damit lässt sich nämlich in vorteilhafter Weise erreichen, dass eine vorgegebene Bewegungsabfolge eingehalten wird, so dass ein vollständiges Spannen des Zentralverschlusses gewährleistet ist und kein vorzeitiges Öffnen des Zentralverschlusses und Betätigen des Blitzlichtgerätes möglich ist.

In Weiterbildung der erfindungsgemässen Vorrichtung sind die Endstellungsgeber als Gabellichtschranken längs des Umfanges des Zentralverschlusses ausgebildet. Damit wird in vorteilhafter Weise erreicht, dass die Zahnstangenbewegung beim Spannen des Zentralverschlusses unabhängig von mechanich zu schliessenden Kontakten ist.

Besonders vorteilhaft ist es, wenn bei der erfindungsgemässen Vorrichtung die Zahnstange ein parallel zum Umfang des Zentralverschlusses angeordnetes Kreisringsegment ist. In diesem Falle erfolgt nämlich eine im wesentlichen gleichförmige Bewegung der Zahnstange und des daran angeschlossenen Aufzugshebels für den Zentralverschluss, ohne dass Übersetzungsanordnungen erforderlich sind.

Bei einer anderen Ausführungsform der erfindungsgemässen Vorrichtung weist der Zentralverschluss ein an eine Spannungsversorgung angeschlossenes elektrooptisches Keramikbauelement auf, an das nach Auslösen der Kamera für das gewünschte Zeitintervall ein elektrisches Feld angelegt wird, bei dem das Keramikbauelement maximale Transparenz besitzt.

Bei einer derartigen Ausführungsform wird in vorteilhafter Weise davon Gebrauch gemacht, dass elektrooptische Keramikbauelemente einen einfachen Aufbau besitzen und bei geringem Energiebedarf und niedrigen Schaltzeiten im Mikrosekundenbereich betrieben werden können, um zwischen dem Zustand maximaler und minimaler optischer Transmission hin- und hergeschaltet zu werden.

Die Erfindung wird nachstehend anhand der Beschreibung von Ausführungsbeispielen und unter Bezugnahme auf die beiliegende Zeichnung näher erläutert. Die Zeichnung zeigt in

Figur 1 eine schematische Darstellung einer Ausführungsform der erfindungsgemässen Vorrichtung ;

Figur 2 eine Draufsicht, teilweise mit Wegbrechungen, auf den Zentralverschluss der erfindungsgemässen Vorrichtung ;

Figur 3 eine Seitenansicht des Zentralverschlusses nach Fig. 2 ; und in

Figur 4 eine schematische Darstellung eines elektrooptischen Keramikbauelementes zur Verwendung bei der erfindungsgemässen Vorrichtung.

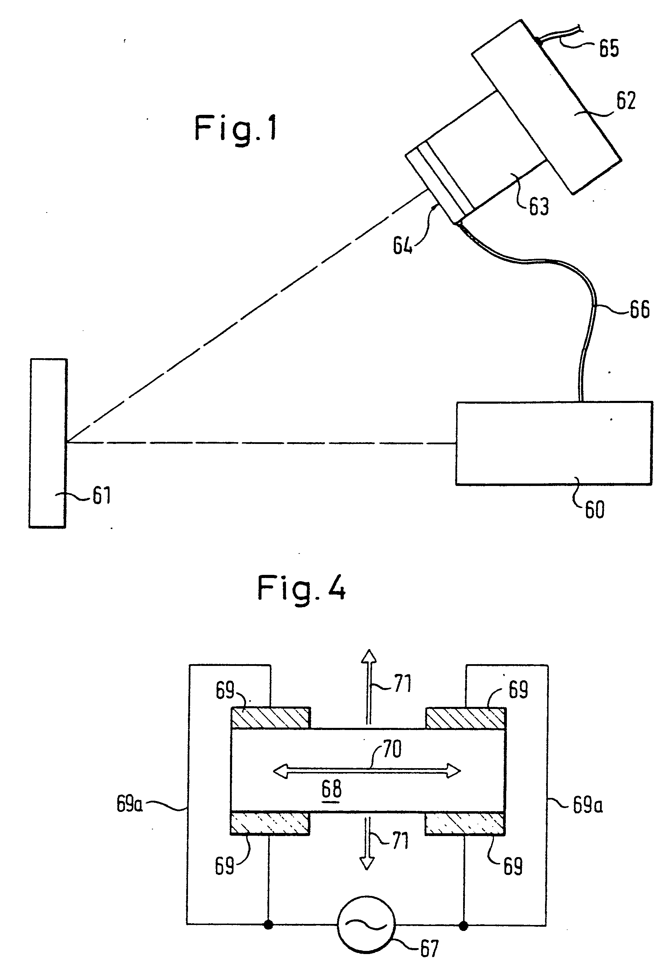

Der generelle Aufbau der erfindungsgemässen Vorrichtung ist in Fig. 1 dargestellt ; man erkennt eine Kamera 62, die von Hand oder über ein Anschlusskabel 65 ausgelöst werden kann. Die Kamera 62 kann beliebiger handelsüblicher Bauart, beispielsweise eine Spiegelreflexkamera sein und weist im Kameragehäuse einen nicht dargestellten Schlitzverschluss unmittelbar vor dem Film auf. Bei der schematischen Darstellung gemäss Fig. 1 ist vor das Kameraobjektiv 63 der Kamera 62 ein blitzsynchronisierter Kameraverschluss 64 gesetzt, der als wesentliches Bauteil einen Zentralverschluss 25 besitzt. Der Kameraverschluss 64 braucht jedoch nicht unbedingt vor dem Kameraobjektiv 63 zu sitzen, sondern kann auch an einer geeigneten Stelle im Objektivtubus in das Kameraobjektiv 63 eingebaut sein. Mit einer derartigen Anordnung wird ein Objekt 61 durch den Zentralverschluss und den Schlitzverschluss photographiert, wobei gleichzeitig eine Auslösung des elektronischen Blitzlichtgerätes 60 erfolgt, das über das Anschlusskabel 66 an den Kameraverschluss 64 angeschlossen ist.

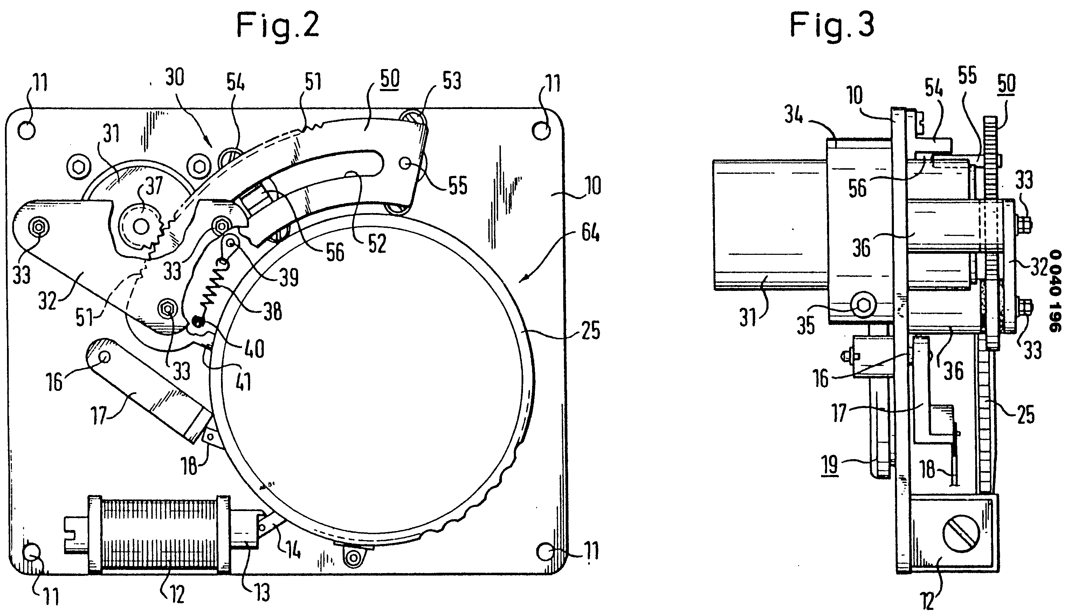

Fig. 2 zeigt in der Draufsicht den äusseren oder blitzsynchronisierten Kameraverschluss 64, der in den Objektivtubus der Kamera 62 eingebaut ist.

Der Kameraverschluss 64 ist auf einer Trägerplatte 10 angeordnet, die mit durch Bohrungen 11 hindurchgehenden Befestigungen am Kameragehäuse montiert wird. Im unteren Bereich der Fig. 2 erkennt man einen Hubmagneten 12, der über ein Betätigungsteil 13 an den Auslöser 14 des Zentralverschlusses 25 angeschlossen ist. Die Betätigung des Hubmagneten zur Auslösung des Zentralverschlusses 25 erfolgt mit der nachstehend näher beschriebenen Steuerung, nachdem der Zentralverschluss 25 gespannt und seine Aufzugseinrichtung 30 ihre Ausgangsstellung wieder eingenommen hat.

Um die Justierung der gesamten Anordnung überprüfen zu können, ohne dass eine Auslösung der Kamera 62 erfolgt, ist am Zentralverschluss 25 ein an ein Betätigungsteil 18 angeschlossenes Stellglied 17 vorgesehen, das auf der dem Betätigungsteil 18 gegenüberliegenden Seite an einen Stift 16 angelenkt ist. Das Öffnen bzw. Schliessen des Zentralverschlusses 25 mittels des Stellgliedes 17 erfolgt über eine Steuerung 19, die in Fig. 3 lediglich schematisch angedeutet ist. Dabei kann z. B. ein Drahtauslöser verwendet werden, um für den Sucherdurchblick den Zentralverschluss für die gewünschte Zeit zu öffnen.

Im oberen Bereich der Fig. 2 erkennt man die Aufzugseinrichtung 30 für den Zentralverschluss 25. Die Betätigung der Aufzugseinrichtung 30 erfolgt mittels eines Schrittmotores 31, der an der Trägerplatte 10 mit einer nachstellbaren Fassung 34 angebracht ist, wobei eine Fixierschraube 35 zu seiner Befestigung und Justierung dient. An der Vorderseite ist der Schrittmotor 31 in einer Lagerplatte 32 gehalten, wobei Abstandshalter 36 mit Befestigungen 33 für die richtige Anordnung der Lagerplatte 32 und des Schrittmotors 31 sorgen.

Neben dem Zentralverschluss 25 ist eine hin- und herbewegbare Zahnstange 50 vorgesehen, die in ihrer Mitte einen Führungsschlitz 52 aufweist, der mit zwei Befestigungen 33 in Eingriff steht und von diesen geführt ist. Die Zahnstange 50 ist an den Aufzugshebel 41 für den Zentralverschluss 25 angeschlossen und nimmt diesen mit, wenn sie sich längs des Umfanges des Zentralverschlusses 25 bewegt. An ihrer Oberseite ist die Zahnstange 50 mit einer Zähnung 51 versehen, die mit einem Zahnrad 37 in Eingriff steht, das auf der Achse des Schrittmotors 31 befestigt ist.

Ferner ist eine Federanordnung zur Unterstützung der Rückholbewegung der Zahnstange 50 in ihre Ausgangsstellung vorgesehen. Diese Federanordnung weist eine Zugfeder 38 auf, die mit einer Halterung 39 an der Trägerplatte 10 und mit einer Halterung 40 an der Zahnstange 50 montiert ist.

Ein Stift 55 an der Rückseite der Zahnstange 50 bewegt sich mit dieser längs einer bogenförmigen Bahn und durchläuft zwei Geber 53 und 54 für die beiden Endstellungen der Zahnstange 50, die diese in der Ausgangsstellung bzw. in der Spannstellung des Zentralverschlusses einnimmt. Diese Geber 53 und 54 für die Endstellungen der Zahnstange 50 können beispielsweise aus Gabellichtschranken bestehen, so dass der Stift 55 in den entsprechenden Schlitzen 56 den Lichtstrahl hindurchlässt oder unterbricht.

Die oben beschriebene Vorrichtung arbeitet folgendermassen : Ist die gesamte Vorrichtung betriebsbereit und die Kamera 62 gespannt, so kann diese von Hand oder über einen elektrischen Impuls über das Anschlusskabel 65 ausgelöst werden. In diesem Augenblick öffnet der Schlitzverschluss in der Kamera 62 für ein relativ langes Zeitintervall in der Grössenordnung von 1/15 Sekunden. Über den X-Kontakt oder Blitzkontakt der Kamera 62 wird der Zentralverschluss 25 des Kameraverschlusses 64 mit einer gewissen Verzögerung geöffnet, und zwar für ein wesentlich kürzeres Zeitintervall geöffnet, beispielsweise für 1/500 Sekunden. Der Zentralverschluss 25 seinerseits betätigt ebenfalls mit einer kurzen Zeitverzögerung über seinen X-Kontakt oder Blitzkontakt das elektronische Blitzlichtgerät 60 und löst das Blitzlicht mit ungefähr 1/1 000 Sekunden aus.

Auf diese Weise ist sichergestellt, dass die einzelnen Zeitintervalle sich nicht überlappen, sondern ineinandergeschachtelt sind und damit eine vollständige Ausnützung des Blitzlichtes gewährleistet ist.

Das Öffnen des Zentralverschlusses 25 erfolgt dabei über den Auslöser 14 und das Betätigungsteil 13, das an den Hubmagneten 12 angeschlossen ist, dessen Impulslänge die Öffnungszeit des Zentralverschlusses 25 vorgibt.

Anschliessend wird die gesamte Vorrichtung neu gespannt, wobei das Spannen des Kameraverschlusses 64 mit der Aufzugseinrichtung 30 erfolgt. Der Stift 55 befindet sich hierbei in der in Fig. 2 wiedergegebenen Ausgangsstellung, d. h. die Lichtschranke des zweiten Gebers 54 ist offen und die Lichtschranke des ersten Gebers 53 unterbrochen.

Sobald der Zentralverschluss 25 ausgelöst worden ist, erhält der Schrittmotor 31 ein entsprechendes Signal und bewegt die Zahnstange 50 durch den Eingriff seines Zahnrades 37 mit der Zähnung 51 bei der Anordnung gemäss Fig. 2 nach links, bis der Stift 55 den Lichtstrahl der Lichtschranke im zweiten Geber 54 unterbricht. In diesem Augenblick ist die Spannstellung des Aufzugshebels 41 des Zentralverschlusses 25 erreicht, und der Schrittmotor erhält ein entsprechendes Signal und hält an. Unmittelbar darauf wird der Schrittmotor 31 umgesteuert und bewegt die Zahnstange 50 in die Ausgangsstellung gemäss Fig. 2 zurück, wobei diese Rückstellung der Zahnstange 50 von der Zugfeder 38 der Federanordnung unterstützt wird. Sobald der Stift 55 den Lichtstrahl der Lichtschranke im Geber 53 unterbricht, wird die Bewegung des Schrittmotors 31 unterbrochen ; der Zentralverschluss 25 ist nun für eine weitere Aufnahme fertig, so dass der Vorgang von neuem ablaufen kann.

Bei der vorstehend beschriebenen Vorrichtung erfolgt die Bewegung der Zahnstange 50 besonders gleichmässig, wenn diese in Form eines Kreisringsegmentes ausgebildet ist, das parallel zum Umfang des Zentralverschlusses 25 verläuft. Die Bewegung der Zahnstange 50 wird dabei durch den Führungsschlitz 52 unterstützt. Die Verwendung des Schrittmotors 31 bietet den Vorteil, das beim Umsteuern zum Hin- und Herbewegen der Zahnstange 50 keinerlei Probleme auftreten.

Ein weiterer Vorteil der Vorrichtung besteht darin, dass beim Kameraverschluss 64 keine völlige Lichtdichte erforderlich ist, da diese vom eigentlichen Kameraverschluss, nämlich dem Schlitzverschluss in der Kamera 62, gewährleistet ist.

Mit der vorstehend beschriebenen Anordnung kann eine Aufnahmefolge von 0,3 bis 0,4 Sekunden erreicht werden, wobei das Zeitintervall zum Spannen des Zentralverschlusses 25 selbst ungefähr 0,25 Sekunden beträgt. Die Verzögerung vom Betätigen des Blitzkontaktes der Kamera 62 bis zum Öffnen des Zentralverschlusses 25 beträgt ungefähr 15 bis 20 Millisekunden.

Die obigen Ausführungen für den Zentralverschluss 25 gelten grundsätzlich für alle Bauformen von Lamellenverschlüssen, unabhängig davon, ob die Bewegung der Lamellen mechanisch oder magnetisch erfolgt, sowie für Rotor-, Segment- oder Lochverschlüsse.

Eine weitere Ausführungsform für den Zentralverschluss ist in Fig. 4 dargestellt. Dabei handelt es sich im wesentlichen um ein elektrooptisches Keramikbauelement 68, das aus Blei-Zirkonat-Titanat besteht und mit Lanthan dotiert ist, wobei derartige elektrooptische Keramikbauelemente im Sinterverfahren hergestellt werden. An den Oberflächen des Keramikbauelementes 68 erkannt man Elektroden 69, die transparent ausgebildet sein und aus Zinnindiumoxid bestehen können. Diese Elektroden 69 sind über Leitungen 69a an eine Spannungsversorgung 67 angeschlossen, um die Lichtdurchlässigkeit des elektrooptischen Keramikbauelements 68 zu steuern. Wird nämlich an die Elektroden 69 eine geeignete Spannung in der Grössenordnung von einigen hundert Volt angelegt und damit ein elektrisches Feld in Richtung des Doppelpfeiles 70 erzeugt, so wird das Keramikbauelement 68 lichtdurchlässig, wobei die Durchstrahlungsrichtung des Lichtes durch den Doppelpfeil 71 angedeutet ist.

Eine derartige Anordnung erfüllt den gleichen Zweck wie der vorstehend beschriebene Zentralverschluss, da das Keramikbauelement 68 normalerweise lichtundurchlässig ist und kurzfristig für ein vorgegebenes Zeitintervall lichtdurchlässig gemacht werden kann, so dass die Verschlussfunktion erfüllt wird, ohne dass ein beträchtlicher mechanischer Aufwand erforderlich ist. Dabei kann man in vorteilhafter Weise ausnutzen, dass keine Bildfeldbegrenzung und keine Blendenwirkung eintreten und extrem kurze Belichtungszeiten realisierbar sind.

Die beiden Ausführungsform der vorstehend beschriebenen Vorrichtung lassen sich für die verschiedensten Anwendungszwecke einsetzen, um schnell bewegte Objekte zu photographieren. Eine derartige Vorrichtung kann beispielsweise im Zusammenhang mit Verkehrsüberwachungseinrichtungen eingesetzt werden, um etwa von vorn oder hinten Aufnahmen von Kraftfahrzeugen zu liefern, die Rotsignale bei Verkehrsampeln missachten oder Höchstgeschwindigkeiten überschreiten.

Verwendet man einen Lamellenverschluss als Zentralverschluss vor dem Kameraobjektiv, so kann dieser bei sehr grossen Blendenöffnungen der Kamera selbst eine gewisse Blendenwirkung ausüben, jedoch hat die Praxis gezeigt, dass eine Vielzahl von Blitzlichtaufnahmen ohnehin mit Blendenwerten von 5, 6 oder 8 gemacht werden. Bei solchen Blendenwerten ist jedoch keine nennenswerte Störung durch die Blendenwirkung des Zentralverschlusses zu beobachten. Werden Kameraobjektive mit grösseren Brennweiten oder Teleobjektive verwendet, so stellt man fest, dass auch bei Blende 4 keine nennenswerte Blendenwirkung stattfindet und dass die Lichtverluste durch die Randabschattung bei diesen Blendenwerten zu vernachlässigen sind. Insbesondere beim Einsatz mit Verkehrsüberwachungseinrichtungen hat sich gezeigt, dass die oben beschriebene Vorrichtung zur Herstellung photographischer Aufnahmen bewegter Objekte besonders gut geeignet ist, da bei den in Frage kommenden Geschwindigkeiten die genannten Werte für die Blende und die Belichtungszeit der Kamera sehr gute Aufnahmen ermöglichen.

**Ansprüche**

1. Verfahren zur Herstellung blitzsynchronisierter photographischer Aufnahmen bewegter Objekte, bei dem mit Hilfe einer Kameraanordnung gearbeitet wird, bei der zeitlich nacheinander ein Schlitzverschluß, ein Zentralverschluß und ein Blitzlicht ausgelöst werden, dadurch gekennzeichnet, daß unter Verwendung einer Kamera, die einen Schlitzverschluß mit Blitzkontakt aufweist, und eines Zentralverschlusses mit einem weiteren Blitzkontakt die verzögerte Öffnung des Zentralverschlusses im Verhältnis zum Schlitzverschluß durch den Blitzkontakt der Kamera und die Auslösung des Blitzlichtes durch den weiteren Blitzkontakt des Zentralverschlusses gesteuert wird, so daß das gesamte Blitzlichtintervall im Öffnungsintervall des Zentralverschlusses und dieses vollständig im Öffnungsintervall des Schlitzverschlusses liegt.

2. Verfahren nach Anspruch 1, dadurch gekennzeichnet, daß mit ineinander geschachtelten Zeitintervallen gearbeitet wird, die größenordnungsmäßig für den Schlitzverschluß 1/15 Sekunden, für den Zentralverschluß 1/500 Sekunden und für das Blitzlicht 1/1 000 Sekunden betragen.

3. Vorrichtung zur Durchführung des Verfahrens nach Anspruch 1 oder 2 mit einer Kamera, mit einem in die Kamera eingebauten Schlitzverschluß, mit einem vor der Kamera angeordneten Zentralverschluß mit Blitzkontakt und mit einem an die Kamera angeschlossenen Blitzlichtgerät, dadurch gekennzeichnet, daß der Zentralverschluß (25) im Objektivtubus vor oder in dem Kameraobjektiv (63) über eine Betätigungseinrichtung an den Blitzkontakt des Schlitzverschlusses angeschlossen ist, daß der Blitzkontakt des Zentralverschlusses (25) seinerseits an das Blitzlichtgerät (60) angeschlossen ist, und daß die Betätigungseinrichtung des Zentralverschlusses (25) ein Betätigungsteil (13) und einen Hubmagneten (12) aufweist, die auf den Auslöser (14) des Zentralverschlusses (25) einwirken.

4. Vorrichtung nach Anspruch 3, dadurch gekennzeichnet, daß der Zentralverschluß (25) ein mechanischer Lamellenverschluß ist und als Aufzugseinrichtung ein von einem Schrittmotor (31) angetriebenes Zahnrad (37) aufweist, das mit einer an den Zentralverschluß (25) angeschlossenen Zahnstange (41, 50) in Eingriff steht.

5. Vorrichtung nach Anspruch 4, dadurch gekennzeichnet, daß die Aufzugseinrichtung des Zentralverschlusses (25) eine Federanordnung (38-40) aufweist, welche die vom Schrittmotor (31) gesteuerte Bewegung der Zahnstange (50) in ihre Ausgangsstellung unterstützt.

6. Vorrichtung nach Anspruch 4 oder 5, dadurch gekennzeichnet, daß die Zahnstange (50) mit einem Führungsschlitz (52) geführt ist und einen Stift (55) aufweist, der zur Steuerung der Zahnstangenbewegung mit zwei Endstellungsgebern (53, 54) zusammenarbeitet.

7. Vorrichtung nach Anspruch 6, dadurch gekennzeichnet, daß die Endstellungsgeber als Gabellichtschranken (53, 54) längs des Umfanges des Zentralverschlusses (25) ausgebildet sind.

8. Vorrichtung nach einem der Ansprüche 4 bis 7, dadurch gekennzeichnet, daß die Zahnstange (50) ein parallel zum Umfang des Zentralverschlusses (25) angeordnetes Kreisringsegment ist.

9. Vorrichtung nach Anspruch 3, dadurch gekennzeichnet, daß der Zentralverschluß ein an eine Spannungsversorgung angeschlossenes, elektrooptisches Keramikbauelement aufweist, an das nach Auslösen der Kamera (62) für das gewünschte Zeitintervall ein elektrisches Feld angelegt wird, bei dem das Keramikbauelement maximale Transparenz besitzt.

**Claims**

1. A method for producing flash-synchronized photographs of moving objects, in which the operation is carried out by means of a camera device, in which a focal-plane-shutter, a central shutter and a flash light are released one after the other, characterized in that in making use of a camera, comprising a focal-plane-shutter having a flash contact, and a focal-plane-shutter having a further flash contact the delayed opening of the central shutter in relation to the focal-plane-shutter and the releasing of the flash light are controlled by the flash contact of the camera and by the further flash contact of the central shutter, respectively, so that the flash light interval is entirely within the opening interval of the central shutter and this opening interval is entirely in the opening of the focal-plane-shutter.

2. A method according to claim 1, characterized in that it is carried out with nested time intervals which are of the order of magnitude of 1/15 seconds for the focal-plane-shutter, 1/500 seconds for the central shutter and 1/1 000 seconds for the flash light.

3. A device for carrying out the method according to claim 1 or 2, comprising a camera, a focal-plane-shutter incorporated in the camera, a central shutter with a flash contact arranged in front of the camera, and a flash light apparatus connected to the camera, characterized in that the central shutter (25) in the lens barrel in front of or in the camera lens (63) is connected to the flash contact of the focal-plane-shutter by means of an actuating device, in that the flash contact of the central shutter (25) is in turn connected to the flash light apparatus (60), and in that the actuating device of the central shutter (25) comprises an actuating part (13) and a lifting magnet (12) actuating upon the release (14) of the central shutter (25).

4. A device according to claim 3, characterized in that the central shutter (25) is a mechanical lamellar shutter and comprises, as an arming device, a gear wheel (37) driven by a stepping motor (31) and in engagement with a rack (41, 50) connected to the central shutter (25).

5. A device according to claim 4, characterized in that the arming device of the central shutter (25) is provided with a spring arrangement (38-40), which assists the movement of the rack (50), which is controlled by the stepping motor (31) into its starting position.

6. A device according to claim 4 or 5, characterized in that the rack (50) is guided by a guide slot (52) and comprises a pin (55), which cooperates with two end position indicators (53, 54) to control the movement of the rack.

7. A device according to claim 6, characterized in that the end position indicators are formed as forked light barriers (53, 54) along the circumference of the central shutter (25).

8. A device according to any of claims 4 to 7, characterized in that the rack (50) is a ring segment parallel to the circumference of the central shutter (25).

9. A device according to claim 3, characterized in that the central shutter comprises an electro-optic ceramic structural element which is connected to a power supply and to which an electrical field is applied after the focal-plane-shutter has been released for the desired time interval, at which field the transparency of the ceramic structural element is at a maximum.

**Revendications**

1. Procédé pour la production de prises de vues photographiques d'objets mobiles avec synchronisation de l'éclair de flash dans lequel on opère à l'aide d'un agencement d'appareil photographique où sont déclenchés temporellement, successivement, un obturateur de fente, un obturateur central et un flash caractérisé en ce que, en utilisant un appareil photographique qui comporte un obturateur de fente avec contact d'éclair et un obturateur central avec un autre contact d'éclair, l'ouverture retardée de l'obturateur central par rapport à l'obturateur de fente est commandée par le contact d'éclair de l'appareil photographique et le déclenchement de l'éclair est commandé par l'autre contact d'éclair de l'obturateur central de sorte que la totalité de la durée de l'éclair de flash soit placée dans l'intervalle d'ouverture de l'obturateur central et que cet intervalle (durée) soit complètement placé dans l'intervalle d'ouverture de l'obturateur de fente.

2. Procédé selon la revendication 1, caractérisé en ce qu'on opère avec des intervalles de temps s'imbriquant l'un dans l'autre et qui s'élèvent en ordre de grandeur, pour l'obturateur de fente, à 1/15 de seconde, pour l'obturateur central, à 1/500 de seconde et pour l'éclair de flash à 1/1 000$^e$ de seconde.

3. Dispositif pour la mise en œuvre du procédé selon l'une des revendications 1 ou 2, avec un appareil photographique, un obturateur de fente monté dans l'appareil photographique, un obturateur central disposé devant l'appareil photographique et avec contact d'éclair, ainsi qu'un flash relié à l'appareil photographique, caractérisé en ce que l'obturateur central (25) placé dans le tube d'objectif devant ou dans l'objectif d'appareil (63) est relié, par l'intermédiaire d'un dispositif d'actionnement, au contact d'éclair de l'obturateur de fente, en ce que le contact d'éclair de l'obturateur central (25) est relié de son côté au flash (60) et en ce que le dispositif d'actionnement de l'obturateur central (25) comporte une partie d'actionnement (13) et un aimant à course axiale (12) qui agissent sur le déclencheur (14) de l'obturateur central (25).

4. Dispositif selon la revendication 3, caractérisé en ce que l'obturateur central (25) est un obturateur mécanique à lames et comporte, comme dispositif de manœuvre, une roue dentée (37) entraînée par un moteur pas à pas (31) et qui est en prise avec une crémaillère (41, 50) reliée à l'obturateur central (25).

5. Dispositif selon la revendication 4, caractérisé en ce que le dispositif de manœuvre de l'obturateur central (25) comporte un agencement à ressort (38, 40) qui accompagne le mouvement, commandé par le moteur pas à pas (31) de la crémaillère (50) vers sa position initiale.

6. Dispositif selon l'une des revendications 4 ou 5, caractérisé en ce que la crémaillère (50) est guidée au moyen d'une fente de guidage (52) et comporte une broche (55) qui coopère avec deux capteurs de position limite (53, 54) pour la commande du mouvement de crémaillère.

7. Dispositif selon la revendication 6, caractérisé en ce que les capteurs de position limite sont agencés sous forme de cellules lumineuses à fourche (53, 54) le long de la périphérie de l'obturateur central (25).

8. Dispositif selon l'une des revendications 4 à 7, caractérisé en ce que la crémaillère (50) est un segment circulaire disposé parallèlement à la périphérie de l'obturateur central (25).

9. Dispositif selon la revendication 3, caractérisé en ce que l'obturateur central comporte un élément électro-optique en céramique, relié à une alimentation en tension et auquel est appliqué, après le déclenchement de l'appareil photographique (62), pour l'intervalle de temps désiré, un champ électrique pour lequel l'élément céramique possède une transparence maximale.

## Fig.1

65

62

63

64

66

61

60

## Fig.4

69

69

71

70

68

69a

69a

69

69

71

67

0 040 196

Fig.3

Fig.2

2